# FASCICULE DE BREVET EUROPEEN

(11) **EP 0 506 533 B1**
(45) Date de publication et mention de la délivrance du brevet: **28.05.1997**
(21) Numéro de dépôt: 92400772.7
(22) Date de dépôt: 23.03.1992
(51) Int. Cl.: B28D 7/04, B28D 1/04

(54) **Appareil de sciage**
Sägegerät
Sawing apparatus

(30) Priorité: 26.03.1991 FR 9103655; 31.10.1991 FR 9113521
(43) Date de publication de la demande: 30.09.1992
(73) Titulaire: Mogavero, Cosimo, F-10600 Barberey St. Sulpice (FR)
(72) Inventeur: Mogavero, Cosimo, F-10600 Barberey St. Sulpice (FR)
(74) Mandataire: Dronne, Guy

(56) Documents cités:
- DE-A- 3 801 487
- DE-A- 3 823 782
- DE-B- 1 205 258
- DE-U- 8 906 577
- US-A- 4 350 552
- Technologie de construction, tome III, organes de machines, par R. Pasquet et A. Giet. Dunod, Paris, 1962, page 85

## Description

La présente invention a pour objet une installation de sciage

De façon plus précise, la présente invention concerne une installation de sciage comportant un appareil capable de scier une pièce minérale, du genre pierres de constructions, marbre ou plaques de marbre, granit, etc.

Dans les appareils connus pour le sciage de ce type de matériaux, l'organe de sciage proprement dit est constitué par un disque dont la paroi externe est munie d'éléments de sciage tels que des dents ou un dépôt de matériaux abrasifs tels que de la poudre de diamant. L'organe de sciage est entraîné en rotation par un arbre disposé selon l'axe de révolution du disque et relié à celui-ci par un moyeu. La pièce à scier est attaquée par une des extrémités de la roue tangentiellement à celle-ci. Le plus souvent c'est l'extrémité inférieure de la roue de sciage qui entre en contact avec la pièce à scier.

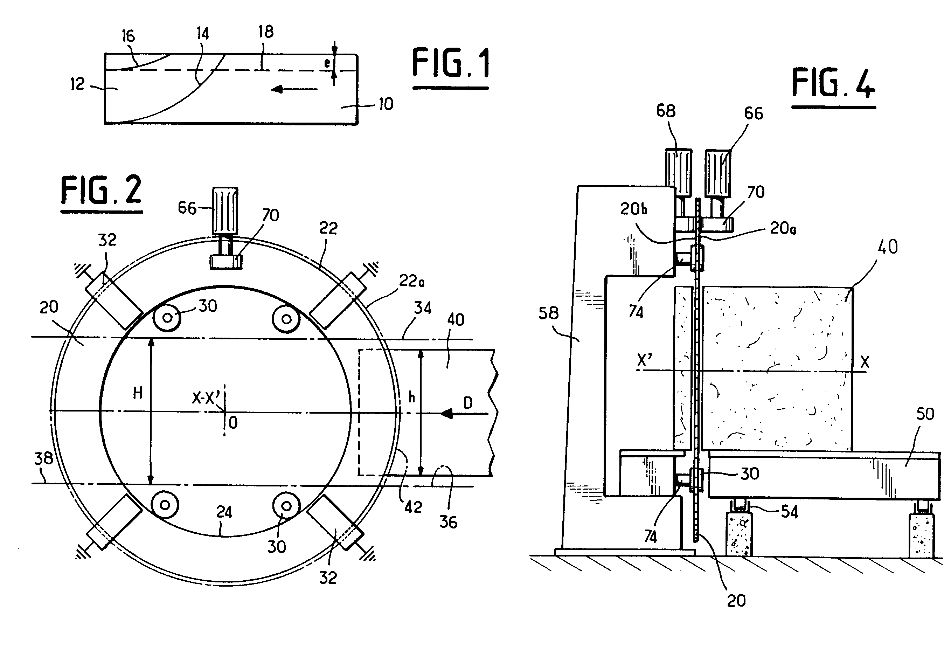

La figure annexée 1 montre une pièce 10 à scier attaquée par une scie circulaire 12 de type classique. Le trait 14 montre le front de sciage dans la pièce 10. L'expérience montre que, lorsque le matériau à scier est un minéral du genre pierre, notamment granit ou marbre, ce type d'attaque tangentielle illustrée par le trait 14 provoque une sorte de bourrage par la poudre minérale sur les éléments de sciage qui diminue très sensiblement l'effet de sciage. Pour permettre effectivement le sciage de la pièce 10, il est alors nécessaire de n'attaquer qu'une partie de la tranche de la pièce comme cela est représenté sur la figure 1 par le trait 16. On comprend qu'ainsi à la suite d'une première passe de la scie, seule la tranche repérée par la ligne en pointillé 18 va être sciée. En conséquence, pour obtenir le sciage de la totalité de la pièce 10, il sera nécessaire de procéder à plusieurs passes successives. On comprend qu'ainsi le temps total de sciage de la pièce 10 est très sensiblement accru, d'une part, du fait de la nécessité d'effectuer plusieurs passes et, d'autre part, même en sciant successivement des tranches d'épaisseur réduite e la vitesse des sciage, c'est-à-dire la vitesse de progression de l'organe de sciage dans la pièce 10 est limitée.

En outre, avec les appareils de sciage classiques à entraînement par un axe central, il est nécessaire que la lame ait une épaisseur supérieure à un centimètre pour scier des matériaux minéraux durs afin d'avoir une rigidité suffisante de la lame compte tenu de la distance entre l'axe et le bord d'attaque. L'épaisseur de la lame entraîne une perte de matériau, ce qui est très défavorable lorsque le matériau est d'une valeur élevée.

Pour remédier à cet inconvénient, le document DE 3 801 487 décrit une machine de sciage dans laquelle les lames sont constituées par des couronnes munies de dents qui sont guidées en rotation et entraînées en rotation par leur périphérie. Ce document décrit en fait une machine de sciage qui n'est pas adaptée à la découpe de matériaux durs, tels que le granit ou le marbre.

Pour remédier à ces inconvénients, un objet de la présente invention est de fournir un appareil de sciage, pour pièce minérale, qui permette d'accroître très sensiblement la vitesse de sciage des pièces et qui réduise les pertes de matière lors du sciage.

Pour atteindre ce but, l'installation de sciage de pièces minérales, selon l'invention, qui comprend:
un appareil de sciage comportant un organe de sciage en forme de couronne plane circulaire, des moyens de mise en rotation de l'organe de sciage autour d'un axe (XX') passant par son centre et des moyens pour guider en rotation ledit organe de sciage pour maintenir ledit organe de sciage dans un plan fixe perpendiculaire audit axe de rotation et pour le maintenir en rotation autour dudit axe, lesdits moyens de mise en rotation et lesdits moyens de guidage étant disposés à l'extérieur d'un volume parallélépipédique rectangle disposé parallèlement au plan de la couronne et contenant le centre de celle-ci, se caractérise en ce que ledit organe de sciage a un diamètre au moins égal à 3 mètres, présentant un bord interne circulaire et un bord externe circulaire, et une épaisseur réduite, un desdits bords étant muni sur toute sa périphérie d'éléments de sciage, en ce que lesdits moyens de mise en rotation agissent sur les faces de ladite couronne et en ce qu'elle comprend en outre un chariot pour recevoir ladite pièce à scier et la déplacer par rapport à l'organe de sciage selon la direction d'un diamètre dudit organe de sciage.
On comprend que, grâce à la disposition particulière de l'invention, la zone centrale de l'organe de sciage, qui est habituellement occupée par l'arbre d'entraînement en rotation de la roue de sciage, est totalement dégagée puisque les organes d'entraînement en rotation et de guidage en rotation sont reportés à l'extérieur d'un volume parallélépipédique disposé au centre de l'organe de sciage. Il est ainsi possible d'attaquer à l'aide de l'organe de sciage la pièce à scier non plus tangentiellement mais selon une direction diamétrale de la couronne formant l'organe de sciage. En outre, comme le guidage de l'organe de sciage est proche du bord d'attaque, l'organe de sciage peut effectivement avoir une épaisseur réduite par rapport aux solutions connues.

Selon un premier mode de mise en oeuvre, les éléments de sciage, par exemple des dents ou des pastilles de diamant ou analogue, sont disposées sur le bord externe circulaire de la scie; selon un deuxième mode de réalisation, les éléments de sciage sont disposés sur le bord interne de la couronne formant la scie.

Selon un mode perfectionné de mise en oeuvre, l'installation de sciage comporte en outre des moyens pour ajouter au mouvement de rotation de l'organe de sciage un mouvement relatif par rapport au déplacement de la pièce à scier présentant une composante, dans le plan de sciage, perpendiculaire à la direction de sciage.

Selon un autre aspect de l'invention, le chariot pour le déplacement relatif de la pièce à scier, utilisable notamment dans l'installation de sciage définie précédemment, comprend un plateau pour recevoir ladite pièce à scier et des moyens pour provoquer le déplacement dudit plateau parallèlement à la direction de sciage et il se caractérise en ce qu'il comprend en outre au moins un bras de saisie d'une plaque découpée dans ladite pièce, ledit bras présentant une extrémité montée pivotante autour d'un axe de pivotement solidaire du plateau et parallèle à la direction de sciage, des moyens pour commander le pivotement du bras entre une première position sensiblement verticale dans laquelle le bras est au contact de la face de la plaque sciée, et une deuxième position dans laquelle le bras est sensiblement horizontal, des moyens de solidarisation solidaires du bras et des moyens de commande pour provoquer la solidarisation de ladite plaque sciée audit bras lorsque celui-ci est dans sa première position et pour inhiber ladite solidarisation lorsque le bras est dans sa deuxième position, et des moyens pour déplacer la pièce perpendiculairement à la direction du sciage d'un pas correspondant à l'épaisseur de la pièce à scier, et des moyens pour déplacer la pièce perpendiculairement à la direction de sciage d'un pas correspondant à l'épaisseur de la plaque sciée.

On comprend que, grâce à ce chariot, on peut amener automatiquement la plaque résultant du sciage de la pièce de sa position initiale verticale vers une position horizontale de préférence à l'extérieur du plateau du dispositif de déplacement de telle manière qu'il soit simple de prendre cette pièce à l'aide de moyens de manutention classiques tels que des chariots élévateurs ou tout autre moyen de déchargement.

D'autres caractéristiques et avantages de la présente invention apparaîtront mieux à la lecture de la description qui suit de plusieurs modes préférés de réalisation de l'invention donnés à titre d'exemples non limitatifs. La description se réfère aux figures annexées sur lesquelles :
- la figure 1, déjà décrite, illustre le principe de sciage d'une pièce selon l'art antérieur ;
- la figure 2 montre sous une forme schématique un premier mode de réalisation de l'appareil de sciage selon l'invention ;
- la figure 3 montre un mode préféré de réalisation de l'appareil de sciage de la figure 2 en vue en perspective ;
- la figure 4 montre l'appareil de sciage de la figure 3 en vue de côté ;
- la figure 5 est une vue de face d'un deuxième mode de réalisation d'une installation de sciage sous une forme simplifiée conforme à l'invention ;
- la figure 6 est une vue de côté de l'installation de sciage de la figure 5 ;
- la figure 7 est une vue en élévation longitudinale d'un chariot de déplacement de bloc minéral pour une installation de sciage selon un premier mode de réalisation ;
- la figure 8 est une vue de face du chariot de déplacement de la figure 7 dans sa position de sciage ;
- la figure 9 est une vue analogue à la figure 8 montrant l'extraction de la plaque sciée à partir du bloc initial ;
- la figure 10 est une vue de dessus simplifiée d'un chariot de déplacement selon un deuxième mode de réalisation;
- la figure 11 est une vue longitudinale en élévation du chariot de déplacement selon le deuxième mode de réalisation ;
- la figure 12 est une vue en élévation de côté du chariot de la figure 10 ;
- la figure 13 est une vue partielle en plan d'un mode préféré de réalisation de l'organe de sciage ; et
- la figure 14 est une coupe selon la ligne XIV-XIV de la figure 13.

En se référant tout d'abord à la figure 2,on va décrire le principe de l'invention. L'appareil de sciage est essentiellement constitué par une couronne plane métallique 20 de centre 0 formant l'organe de sciage. La couronne 20 définit ainsi un bord circulaire externe 22 portant les éléments de sciage 22a, par exemple des dents, et un bord circulaire interne 24. La couronne 20 est entraînée en rotation autour d'un axe XX′ passant par son centre 0, par un moteur 66, 68 agissant sur les faces de la couronne 20 par l'intermédiaire d'un système de transmission 70. La couronne 20 est guidée en rotation autour de l'axe XX′ d'une part par une série de quatre galets 30 agissant sur le bord interne 24 de la couronne 20. Les galets 30 sont disposés de telle manière qu'ils centrent en permanence la couronne 20 autour de son axe de rotation XX′. Des rouleaux de guidage tels que 32 servent à maintenir la couronne 30 lors de sa rotation dans un plan fixe perpendiculaire à l'axe XX′, plan qui constitue aussi le plan de sciage.

Selon une caractéristique essentielle de l'invention, les éléments d'entraînement, c'est-à-dire le moteur 26 et sa chaîne cinématique 28 ainsi que l'ensemble des éléments de guidage et de maintien constitués par les galets 30 et les rouleaux de guidage 32, sont disposés à l'extérieur d'un volume qui, dans le plan de sciage, est défini par les lignes parallèles 34 et 36. Dans le cas de la figure 2, les lignes 34 et 36 sont horizontales et elles sont distantes d'une longueur H, les lignes 34 et 36 étant symétriques par rapport au centre 0 de la couronne 20.

On comprend qu'ainsi, grâce au mode particulier d'entraînement en rotation et de guidage en rotation de l'organe de sciage 20, la partie centrale de la couronne de sciage limitée par les droites 34 et 36 est totalement libre contrairement à ce qui se produit dans les appareils de sciage classique. Il est donc possible que la pièce à scier 40 soit déplacée par rapport à l'organe de sciage 20 selon une direction diamétrale comme le montre la figure 2, la pièce 40 lors de l'opération de sciage se déplaçant à l'intérieur du volume défini par la bande 38 limitée par les droites 34 et 36. Plus précisément, les galets 30 et les rouleaux 32 sont régulièrement répartis de part et d'autre du volume laissé libre. Cela assure ainsi un très bon maintien de l'organe de sciage, notamment dans la zone d'attaque.

On comprend qu'ainsi le bord d'attaque ou de sciage 42 dans la pièce 40 présente une courbure réduite par rapport au cas d'une scie de type classique. L'expérience montre que, grâce à ce type d'attaque de la pièce 40 à scier, il est possible sans risquer de phénomènes de bourrage de scier en une seule passe la totalité de la tranche de la pièce 40 à condition bien sûr que celle-ci présente une épaisseur inférieure à H.

Le dimensionnement de la couronne de sciage doit être fait d'une part pour définir un volume libre, c'est-à-dire une hauteur H libre adaptée aux dimensions des pièces à scier. Le dimensionnement doit également donner un rayon de courbure externe, c'est-à-dire du bord 22 de sciage, suffisant pour autoriser une vitesse de coupe convenable. En effet, on comprend que plus le rayon de courbure sera grand, plus la vitesse de rotation pourra être élevée pour une pièce de hauteur h donnée. Pour cela le diamètre de l'organe de sciage est au moins égal à 3 mètres et, de préférence, il est de l'ordre de 5 à 6 mètres afin de permettre le sciage de pièces volumineuses.

Dans le cas de la figure 2, on a représenté un organe de sciage dans lequel les éléments de sciage 22a sont disposés sur le bord externe de la couronne 20. On comprend cependant qu'on pourrait tout aussi bien prévoir des éléments de sciage sur le bord 24 interne de la couronne. Dans ce cas, les galets de centrage 30 pourraient être munis de dents ou avoir un profil apte à coopérer avec des encoches séparant les différents éléments de sciage disposés sur le bord interne 24. Il serait également possible de prévoir le centrage de la couronne par des éléments analogues au galet 30 mais coopérant avec le bord externe 22 de la couronne 20. Cette dernière solution présente l'avantage que, lors du sciage, l'action exercée par la pièce à scier sur la couronne 20 entraîne un moins grand risque de déformation de celle-ci que dans le cas où les éléments de sciage sont disposés sur le bord externe de la couronne.

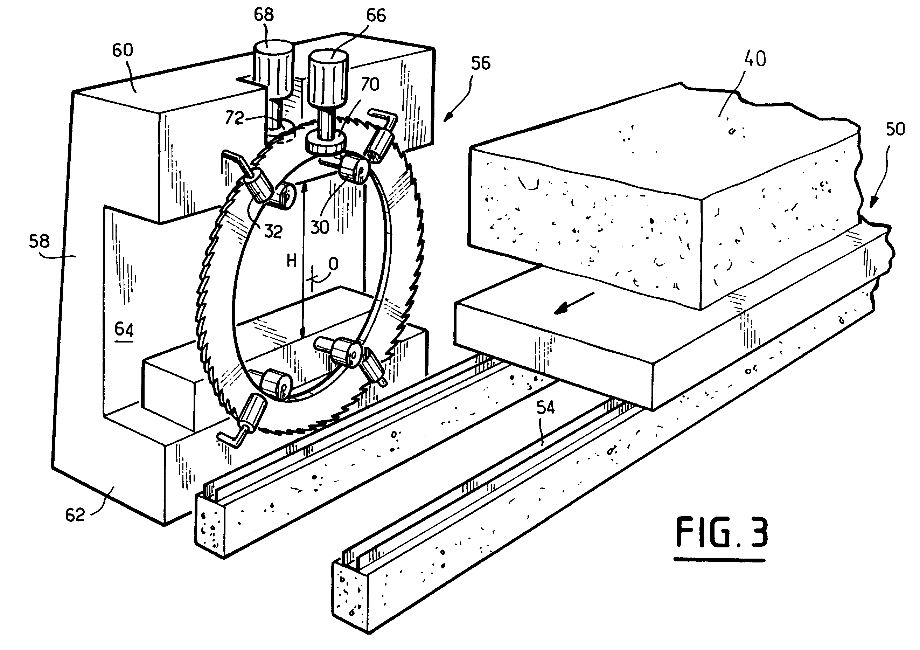

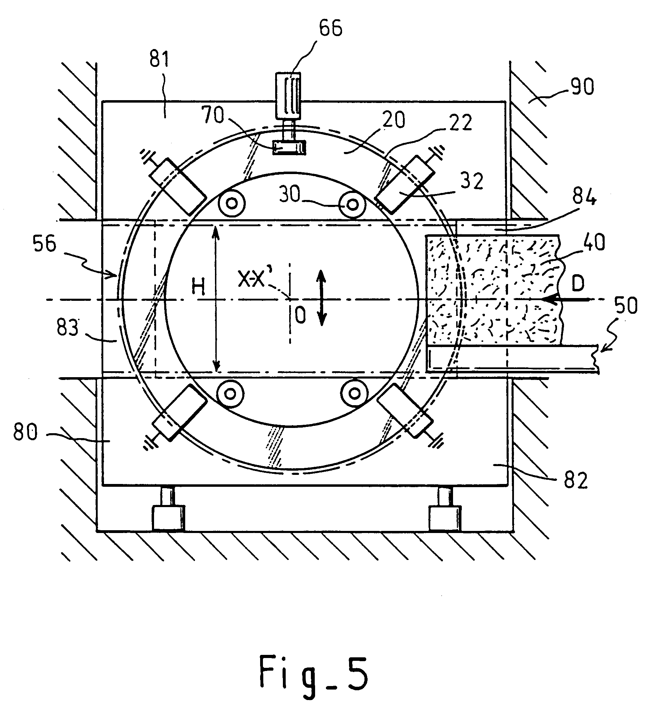

En se référant maintenant aux figures 3 et 4, on va décrire un mode préféré de réalisation de l'appareil de sciage selon l'invention. L'appareil de sciage comprend outre les moyens de sciage proprement dit un chariot 50 sur lequel est placé en porte-à-faux la pièce 40 à scier. Le chariot 50 se déplace sur des rails de guidage 54 qui sont bien sûr parallèles au plan de sciage. Les moyens de sciage 56 comprennent un bâti vertical 58 comportant une aile supérieure 60 et une aile inférieure 62. Les ailes 60 et 62 dégagent ainsi un volume libre horizontal 64 au centre des moyens de sciage. Les moyens de sciage 56 comportent également la couronne de sciage 20 qui est munie sur son bord externe 22 des éléments de sciage 22a représentés ici par des dents. L'entraînement en rotation de la couronne 20 autour de son axe xx' est assuré par exemple par deux moteurs électriques 66 et 68 qui entraînent deux disques à friction 70 et 72 agissant sur chaque face 20a et 20b de la couronne. On retrouve également les galets de centrage 30 qui sont par exemple montés fous sur des axes horizontaux 74 solidaires respectivement des ailes supérieure 60 et inférieure 62 du bâti 58. Sur la figure 3, on a également représenté des rouleaux de guidage 32 qui coopèrent avec des contre-rouleaux, non représentés, pour maintenir la couronne 20 dans son plan de sciage par rapport à l'axe de rotation xx′.

Il va de soi que l'entraînement de la couronne 20 en rotation et le guidage de cette couronne ainsi que son centrage pourraient être assurés par d'autres moyens que ceux qui ont été décrits à titre d'exemples en liaison avec les figures 3 et 4. Il faut cependant que ces moyens de guidage, de centrage et d'entraînement soient disposés de telle manière qu'ils laissent libre la zone médiane 64 pour permettre le passage de la pièce à scier 52.

De même, comme on l'a déjà indiqué, les éléments de sciage pourraient être disposés sur le bord interne de la couronne 20. Dans ce cas, on comprend que le chariot doit d'abord permettre d'imprimer à la pièce à scier un déplacement parallèle à l'axe XX′ de rotation de la couronne 20 pour amener la partie de la pièce à scier à l'intérieur de la couronne dans le plan de sciage convenable. Ensuite, le chariot 50 est animé du mouvement de translation déjà décrit pour effectuer le sciage.

En outre, la zone libre de sciage est disposée horizontalement. On comprend qu'on ne sortira pas de l'invention si cette zone était disposée verticalement ou selon toute direction angulaire convenable.

De même, au lieu que ce soit la pièce à scier qui soit déplacée par rapport aux moyens de sciage 56, on pourrait prévoir un appareil de sciage dans lequel la pièce 40 à scier est maintenue verticale, les moyens de sciage étant alors déplacés et globalement en translation.

Une autre caractéristique de l'invention consiste dans le fait que la lame formée par la couronne est guidée et maintenue (galets, rouleaux) très près du bord de sciage. Cela permet de réduire sensiblement l'épaisseur de la couronne. De préférence, cette épaisseur est inférieure ou égale à 9 mm. Les essais effectués avec une lame de 5 mm d'épaisseur et de 5 mm de diamètre ont montré qu'on obtient une très bonne planéité de la découpe malgré l'épaisseur réduite. Cependant, on comprend que l'épaisseur de la lame doit être en rapport avec le diamètre de celle-ci. Pour des très grandes diamètres de lame, on pourrait être amené à utiliser une épaisseur supérieure à 1 cm, ce qui reste inférieur aux épaisseurs de lames utilisées précédemment pour de tels diamètres. Cela entraîne trois avantages principaux : le coût de fabrication de la scie est réduite ; l'épaisseur du trait de scie est également diminuée, ce qui entraîne une moindre perte de matériau minéral ; enfin, la pénétration de la lame (couronne) dans le matériau est améliorée. De plus, les éléments d'entraînement de la couronne agissent sur les faces 20a,20b de celle-ci. Cela permet d'appliquer effectivement à la couronne le couple nécessaire pour obtenir le sciage de pièces en matériau minéral dur du type marbre ou granit.

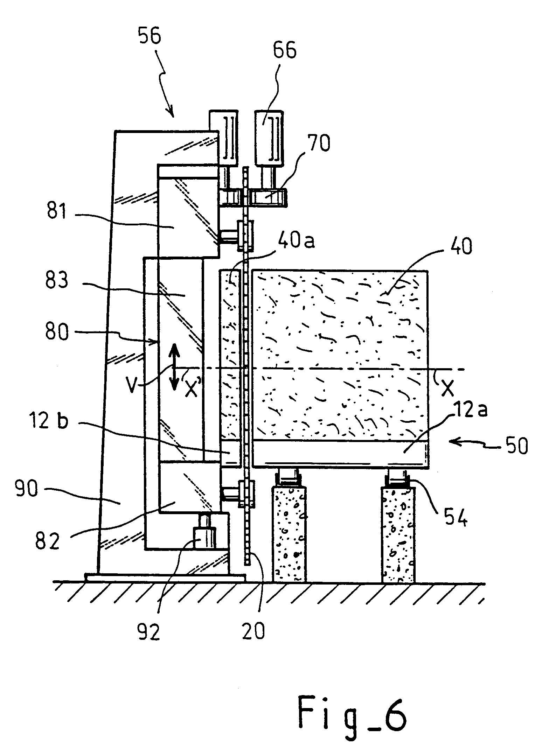

Pour certains travaux, il peut être intéressant d'utiliser un deuxième mode de réalisation de l'installation de sciage qui va être décrit en liaison avec les figures 5 et 6.

L'installation comporte, d'une part, le chariot 50 et, d'autre part, un appareil de sciage portant la référence générale 56 qui est du même type que celui qui est décrit en liaison avec les figures 2 à 4. L'appareil de sciage est constitué essentiellement par une lame 20 en forme de couronne circulaire de centre 0. La périphérie externe 22 de la lame 20 est munie des organes de sciage convenables, tels que des dents ou des segments diamantés. La lame circulaire 20 est montée à rotation autour d'un axe XX′ passant par son centre 0 grâce à des galets de guidage et de centrage 30 et à des patins 32 pour maintenir la lame 20 dans un plan vertical constant. En outre, un système d'entraînement à rotation 66 coopère avec les faces principales de la lame, par exemple par l'intermédiaire de galets 70 et de contre-galets pour provoquer la rotation de la lame autour de l'axe XX′. Dans le mode de réalisation présentement décrit, l'ensemble des éléments de guidage 30,32 et des éléments d'entraînement en rotation 66,70 sont montés sur un premier bâti 80 constitué par une poutre supérieure 81, une poutre inférieure 82 et des montants 83 et 84. Les éléments de guidage 30,32 et les éléments d'entraînement à rotation 66,70 sont disposés de telle manière qu'il existe un volume de hauteur H de part et d'autre du centre de la lame 20 qui soit totalement libre pour le passage du bloc 18 à scier et du chariot 50. On comprend qu'ainsi comme on l'a déjà indiqué, la lame 20 attaque frontalement le bloc à scier et non tangentiellement.

Comme le montre mieux la figure 6, le chariot 50 se déplace sur des rails de guidage tels que 54 qui sont bien sûr disposés parallèlement à la direction de sciage D. La figure 6 montre également que la partie principale 12a du plateau du chariot 50 se trouve à "l'extérieur" de la lame 20 alors que la partie latérale 12b se trouve entre la lame 20 et le premier bâti.

La figure 6 montre également que l'ensemble du premier bâti 80 est monté sur un deuxième bâti fixe 90 par l'intermédiaire d'un ensemble de vérins 92 permettant de provoquer un déplacement en translation verticale V du premier bâti 80 par rapport au bâti fixe 90. Il va de soi qu'on pourrait utiliser d'autres moyens de déplacement alternatif, par exemple un excentrique commandé par un moteur. Le bâti fixe 90 comporte également des moyens de guidage en translation du bâti mobile 80, ces moyens n'étant pas représentés sur les figures. On comprend qu'ainsi, en plus du mouvement de rotation de la lame 20 autour de l'axe horizontal XX′, la lame est animée d'un mouvement alternatif de translation de direction V et d'amplitude prédéterminée par exemple de l'ordre de 5 à 8 cm de part et d'autre de sa position médiane.

Le fait que la lame soit animée de ce mouvement alternatif de translation verticale permet d'améliorer l'efficacité du sciage en évitant des phénomènes de bourrage de la poudre résultant du sciage entre la partie de la pièce à scier et les organes de sciage de la lame. Plus précisément ce mouvement vertical permet un auto-ravivage des éléments de sciage lorsque ceux-ci sont en particulier constitués par des pastilles de diamant.

Il faut comprendre que ce mouvement alternatif supplémentaire de la lame n'est pas nécessairement obtenu par un mouvement alternatif de translation verticale du bâti mobile par rapport au bâti fixe. Il suffit que ce mouvement présente une composante perpendiculaire à la direction de sciage dans le plan de sciage. Cela peut aussi être obtenu en montant le bâti portant la couronne à l'extrémité d'un bras animé d'un mouvement de rotation alternée autour d'un axe fixe parallèle à l'axe de la couronne d'une amplitude limitée par exemple de 5 à 8 cm par rapport à l'horizontale. Ce mouvement additionnel relatif peut également être obtenu en prévoyant que le plateau sur lequel repose directement la pièce à scier soit animé d'un mouvement alternatif de rotation d'amplitude limitée par rapport au chassis du chariot autour d'un axe parallèle à l'axe XX′ de la couronne 20. On obtient ainsi un mouvement alternatif présentant une composante perpendiculaire à la direction de sciage c'est-à-dire à la direction de déplacement du chariot.

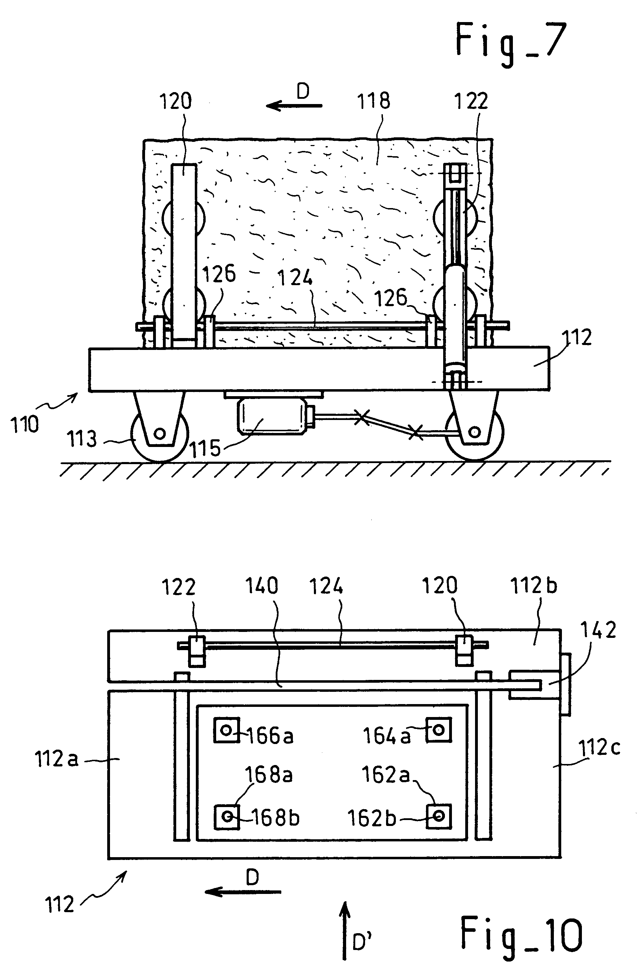

En se référant maintenant aux figures 7 à 12, on va décrire des modes préférés de réalisation du chariot, notamment utilisable dans l'installation de sciage décrit précédemment.

En se référant tout d'abord aux figures 7 à 9, on va décrire un premier mode de réalisation du dispositif de déplacement, ultérieurement appelé chariot. Comme le montre la figure 7, le chariot 110 est constitué par un plateau horizontal 112 sur lequel sont fixées quatre roues de roulement, ou galets, tels que 113. Un organe moteur 115 permet de commander le déplacement du chariot 110 sur des rails de guidage non représentés.

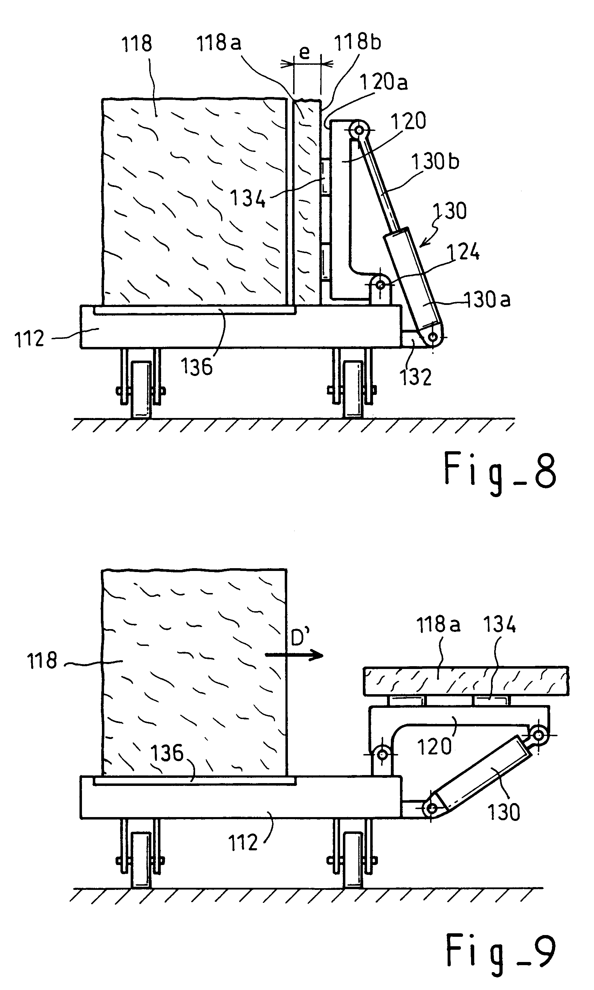

Le plateau 112 du chariot est destiné à recevoir un bloc de matériau minéral 118 qui repose sur la face supérieure du plateau. Comme on le voit sur la figure 8, sur une partie latérale du plateau 112 par rapport à la direction de déplacement D du chariot est disposé un système de bras 120, 122 qui sont solidaires d'un axe de rotation 124 disposé parallèlement à la direction de déplacement D. L'axe de rotation est monté pivotant par l'intermédiaire de paliers tels que 126 solidaires du plateau 112. Le pivotement simultané des bras 120 et 122 autour de l'axe 124 est commandé par un ou deux vérins 130. Chaque vérin 130 comporte un corps 130a qui est articulé sur une pièce 132 solidaire du plateau 112 et une tige 130b dont l'extrémité est solidaire du bras correspondant 120 ou 122. On comprend au vu des figures 8 et 9 qu'en commandant le ou les vérins on peut faire passer le bras 120 de sa position verticale représentée sur la figure à une position horizontale représentée sur la figure 9. La face interne 120a de chaque bras 120 est munie d'organes de solidarisation tels que 134 qui permettent de réaliser une solidarisation entre le bras 120 et la face 118b du bloc 118 à scier. Plus précisément, cette face 118b correspond à la plaque 118a qui doit être sciée à partir du bloc total. De préférence, les organes de solidarisation 134 sont constitués par des systèmes à dépression en forme de ventouses déformables qui sont reliés à une source de vide non représentée.

On comprend qu'après le sciage d'une première plaque 118a, il est nécessaire de déplacer l'ensemble du bloc restant 118 selon la direction D′ perpendiculaire à la direction de sciage D pour amener le bloc dans sa nouvelle position de sciage. Pour cela, le plateau 112 est muni d'un dispositif de déplacement du bloc, selon la direction D′, ce système portant la référence générale 136. Le système de déplacement latéral 136 permet de déplacer, selon la direction D′, le bloc 118 d'un pas égal à l'épaisseur e des plaques à scier. Le dispositif 136 sera décrit ultérieurement plus en détails dans un mode préféré de réalisation.

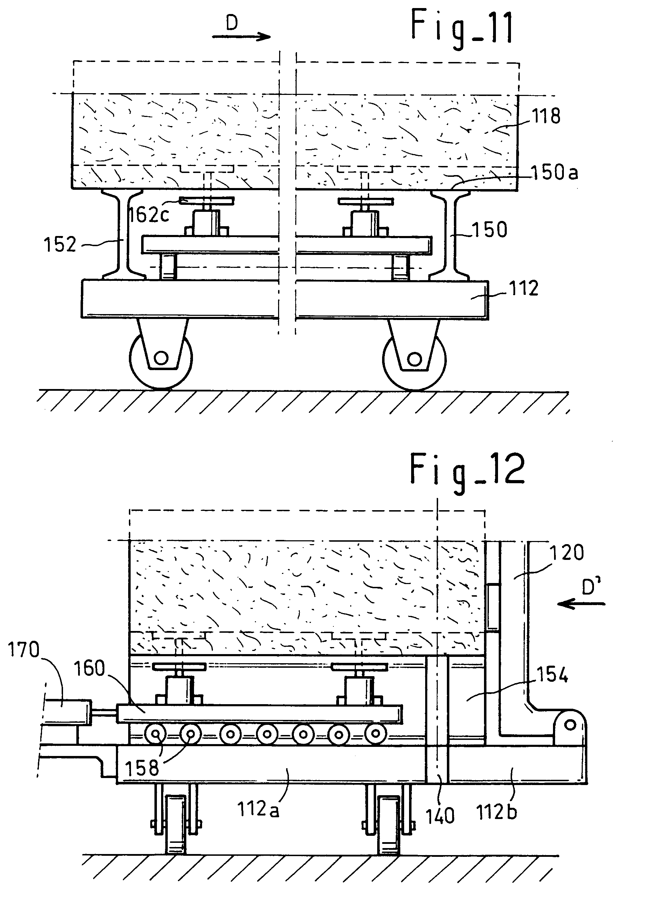

Avec certains appareils de sciage, notamment ceux qui sont décrits en liaison avec les figures 1 à 6, la lame de sciage ou l'organe de sciage n'attaque pas tangentiellement le bloc 118 mais frontalement. On comprend que, dans ce cas, il est nécessaire que le chariot 110 présente le bloc 118 dans la position requise. Pour permettre ce positionnement correct, il est nécessaire que le chariot présente une fente parallèle à la direction de sciage D permettant le passage de la partie inférieure de l'organe de sciage. C'est ce qu'on a représenté sur la figure 10. Le plateau 112 du chariot est constitué par une partie principale 112a et par une portion latérale 112b qui sont séparées par une fente parallèle à la direction D de déplacement du chariot. La fente 140 ne se poursuit pas jusqu'à l'extrémité arrière 112c du plateau 112. Une pièce de solidarisation 142 assure la liaison mécanique entre la partie principale 112a et la partie latérale 112b, tout en dégageant la fente 140 sur la course utile de sciage.

Sur la figure 10, on a représenté montés sur la partie latérale 112b du plateau les bras pivotants 120, 122 ainsi que l'axe de rotation 124. Pour permettre le déplacement selon la direction D′ du bloc 118, le plateau 112 est muni de moyens de supportage du bloc qui sont constitués, par exemple, par deux premières portions d'IPN 150 et 152 solidaires de la partie principale 112a du plateau et disposées parallèlement à la direction D′ et par deux portions d'IPN 154 et 156 également parallèles à cette direction mais solidaires de la partie latérale du plateau 112b et prolongeant les portions 152 et 150. Sur la partie principale 112a du plateau et disposé entre les éléments de supportage 150 et 152, on trouve un ensemble de galets de roulement tels que 158 permettant un déplacement selon la direction D′. Sur ces galets est disposée une plaque horizontale 160 placée également entre les éléments de supportage 150 et 152. Sur la face supérieure de la plaque 160 sont fixées les corps 162a, 164a, 166a et 168a de quatre vérins 162 à 168 à déplacement vertical. Les tiges 162b à 168b de ces vérins sont solidaires de plaquettes de soulèvement 162c à 168C. Lorsque le vérin est au repos, c'est-à-dire que les tiges sont totalement rentrées, les plaquettes 162 sont en retrait par rapport aux faces supérieures 150a et 152a des éléments de supportage 150 et 152. Dans cette position, le bloc 118 est donc en appui sur les éléments de supportage. Au contraire, lorsque les tiges 162b à 168b sont en position sortie, les plaquettes 162c à 168c provoquent un léger soulèvement du bloc 118 par rapport aux éléments de supportage 150 et 152. En outre, un vérin 170 solidaire du plateau 112 ou plus précisément de sa partie principale 112a permet de déplacer la plaque 160 parallèlement à la direction D′ d'une distance telle que, dans une première position, la plaque 160 soit entièrement disposée au-dessus de la partie principale 112a du plateau 112 et que, dans une deuxième position, cette plaque 160 soit également au-dessus de la partie latérale 112b du plateau comprise entre les éléments de supportage 154 et 156.

Le fonctionnement du chariot est le suivant : le bloc 118 est initialement disposé sur les éléments de supportage 150 à 156 du plateau de telle manière que la partie à scier 118a soit au-dessus des éléments de supportage 154 et 156. Le chariot 110 est déplacé grâce au moteur 115 de telle manière qu'il présente une course correspondant à la longueur de sciage. Puis le chariot est déplacé dans la direction inverse. Dans cette première phase, les bras 120 sont en position verticale et les éléments de solidarisation 134 sont activés. Lors du retour à la position initiale, il suffit alors de commander les vérins 130 pour amener les bras 120 dans une position horizontale telle que représentée sur la figure 9. La plaque découpée 118a est ainsi amenée à l'extérieur du plateau 112 en position horizontale. Il est alors aisé, à l'aide d'un chariot élévateur, de saisir la plaque 118a et de la stocker à un endroit convenable. Dans cette position du chariot, les vérins 130 sont à nouveau commandés pour ramener les bras en position verticale. La course est telle que les éléments de solidarisation 134 arrivent à nouveau en contact avec la face latérale du reste du bloc à découper. Dans la phase suivante, on provoque le déplacement du bloc 118 selon la direction D′ d'une longueur correspondant à l'épaisseur de la plaque. Pour cela, on provoque le soulèvement des vérins 162 à 168, ce qui entraîne le soulèvement du bloc 118 qui n'est plus en appui sur les éléments de supportage 150 à 156. Tout en maintenant les vérins de soulèvement activés, on commande le vérin 170 pour provoquer le déplacement, selon la direction D′, de l'ensemble de la plaque 160, ce qui entraîne la déplacement simultané dans cette direction du bloc 118 dont la partie à scier vient au-dessus des éléments de supportage 154 et 156 de la partie latérale 112b du plateau. Dans cette position, on commande le retrait des tiges de vérin de telle manière que le bloc 118 vienne en appui sur les éléments de supportage 150 à 156, le bloc étant en position pour l'opération de sciage suivante. On commande alors le vérin 170 pour ramener la plaque 160 dans sa position initiale, c'est-à-dire celle qui est représentée sur la figure 12.

Un autre problème consiste dans le fait qu'avec les appareils de sciage de très grandes dimensions, leur transport est plus délicat, en particulier en raison du diamètre important de la lame, les autres parties de l'appareil pouvant être démontées sans difficulté particulière.

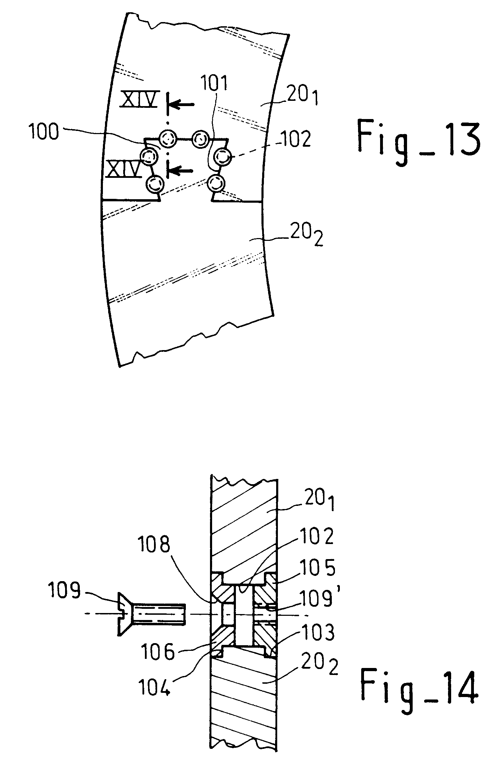

Pour remédier à cet inconvénient, on va décrire un mode de réalisation de l'organe de sciage ou lame démontable tout en assurant une grande efficacité de sciage. Ce mode de réalisation est illustré par les figures 13 et 14.

La couronne 20 formant la lame est constituée par plusieurs segments de couronne, par exemple trois 20₁, 20₂, 20₃ de dimensions identiques. Les extrémités de chaque segment se terminent par un assemblage en queue d'arronde 100, 101. On obtient ainsi la solidarisation des segments selon la circonférence de la lame. La solidarisation des éléments, selon la direction de l'axe de rotation XX′ de la lame est réalisée de la manière suivante :

Dans le plan de raccordement des deux parties de la queue d'arronde 100, 101 sont percés des orifices tels que 102 qui appartiennent aux deux segments 20₁ et 20₂. Comme le montre la figure 14, l'orifice 102 comporte un lamage 103, 104 à son débouché dans les faces 20a, 20b des segments. Des pastilles métalliques 106, 105 comportant chacune un épaulement 107 peuvent être introduites dans l'orifice 102, les épaulements 107 étant logés dans les lamages 103, 104. La pastille 106 comporte un orifice conique 108 pour recevoir la tête d'une vis fraisée 109. La pastille 105 comporte un taraudage 109' pour la vis 109. Après introduction des pastilles 105, 106 et le serrage des vis 109, on obtient une excellente solidarisation des segments de la couronne tout en autorisant un démontage commode de celle-ci.

## Revendications

1. Installation de sciage de pièces minérales du genre marbre, plaque de marbre ou granit comprenant un appareil de sciage comportant un organe de sciage en forme de couronne (20) plane circulaire, des moyens de mise en rotation (66, 68) de l'organe de sciage autour d'un axe (XX') passant par son centre (0) et des moyens (30, 32) pour guider en rotation ledit organe de sciage pour maintenir ledit organe de sciage dans un plan fixe perpendiculaire audit axe de rotation et pour le maintenir en rotation autour dudit axe, lesdits moyens de mise en rotation et lesdits moyens de guidage étant disposés à l'extérieur d'un volume parallélépipédique rectangle (34, 36, 38, 64) disposé parallèlement au plan de la couronne et contenant le centre (0) de celle-ci, caractérisée en ce que ledit organe de sciage a un diamètre au moins égal à 3 mètres présentant un bord interne (24) circulaire et un bord externe circulaire (22), et une épaisseur réduite, un desdits bords étant muni sur toute sa périphérie d'éléments de sciage (22a), en ce que lesdits moyens de mise en rotation (66, 68) agissent sur les faces de ladite couronne (20a, 20b) et en ce qu'elle comprend en outre un chariot pour recevoir ladite pièce à scier et la déplacer par rapport à l'organe de sciage selon la direction d'un diamètre dudit organe de sciage.

2. Installation de sciage selon la revendication 1, caractérisée en ce qu'elle comprend en outre des moyens (90, 92) pour ajouter audit mouvement de rotation de l'organe de sciage un mouvement alternatif relatif par rapport au déplacement de la pièce à scier présentant une composante, dans le plan de sciage, perpendiculaire à la direction de sciage.

3. Installation de sciage selon l'une quelconque des revendications 1 et 2, caractérisée en ce que les éléments de sciage (22a) sont disposés sur le bord externe (22) de ladite couronne (20), en ce que lesdits moyens de guidage comprennent des galets de guidage (30) coopérant avec le bord interne (24) de ladite couronne et des rouleaux de guidage (32) coopérant avec les faces (20a, 20b) de ladite couronne.

4. Installation de sciage selon la revendication 3, caractérisée en ce que lesdits moyens d'entraînement en rotation comportent des moyens moteurs (66, 68) dont la sortie est reliée à des moyens de transmission (70, 72) coopérant avec les faces (20a, 20b) de ladite couronne (20) pour lui transmettre le couple moteur.

5. Installation de sciage selon l'une quelconque des revendications 1 et 2, caractérisée en ce que les éléments de sciage sont disposés sur le bord interne (24) de ladite couronne (20).

6. Installation de sciage selon l'une quelconque des revendications 1 à 5, caractérisée en ce que le volume parallélépipédique a un axe horizontal passant par le centre (0) de la couronne (20) et présentant selon la direction verticale une hauteur (H) supérieure à la hauteur (h) des pièces à scier.

7. Installation de sciage selon l'une quelconque des revendications 1 à 6, caractérisée en ce que lesdits moyens de guidage (30, 32) sont disposés de part et d'autre dudit volume parallélépipédique rectangle (34, 36, 38, 64).

8. Installation de sciage selon l'une quelconque des revendications 2 à 7, caractérisée en ce que ledit organe de sciage (20) est constitué par plusieurs éléments de couronne (20₁, 20₂, 20₃) solidarisés entre eux par des moyens démontables.

9. Installation de sciage selon l'une quelconque des revendications 1 à 8, caractérisée en ce que ledit chariot comprend un plateau (12) pour recevoir ladite pièce à scier, des moyens pour provoquer le déplacement dudit plateau parallèlement à la direction de sciage, au moins un bras (120, 122) de saisie d'une plaque découpée (118a) dans ladite pièce, ledit bras présentant une extrémité montée pivotante autour d'un axe (124) de pivotement solidaire du plateau (112) et parallèle à la direction de sciage (D), des moyens (130) pour commander le pivotement du bras entre une première position sensiblement verticale dans laquelle le bras est au contact de la face (118b) de la plaque sciée, et une deuxième position dans laquelle le bras est sensiblement horizontal, des moyens de solidarisation (134) solidaires du bras et des moyens de commande pour provoquer la solidarisation de ladite plaque sciée audit bras lorsque celui-ci est dans sa première position et pour inhiber ladite solidarisation lorsque le bras est dans sa deuxième position, et des moyens (136) pour déplacer la pièce perpendiculairement à la direction de sciage d'un pas correspondant à l'épaisseur de la pièce a scier.

10. Installation de sciage selon la revendication 9, caractérisée en ce que ledit chariot comprend deux bras (120, 122) sensiblement identiques montés pivotant autour dudit axe de pivotement (124) et commandés en synchronisme, lesdits bras étant distants l'un de l'autre.

11. Installation de sciage selon l'une quelconque des revendications 9 et 10, caractérisée en ce que lesdits moyens de solidarisation (34) sont des systèmes à dépression.

12. Installation de sciage selon l'une quelconque des revendications 9 à 11, caractérisée e ce que ledit plateau (112) comprend une fente (140) parallèle à la direction de déplacement s'étendant d'une première extrémité dudit plateau à la deuxième extrémité dudit plateau pour définir une partie principale (112a) du plateau et une partie latérale (112b) du plateau destinée à recevoir la portion de la pièce à scier (118a), lesdites deux parties étant solidaires entre elles à ladite deuxième extrémité (142), et en ce que les moyens de déplacement comprennent des premiers (150, 152) et des deuxièmes (154) moyens de supportage de la face inférieure de la pièce respectivement solidaire de ladite partie principale et de ladite partie latérale, des moyens de soulèvement (162, 164, 166, 168) de ladite pièce mobile entre une première position dans laquelle ils ne sont pas en contact avec ladite pièce et une deuxième position dans laquelle ils soulèvent ladite pièce de telle manière que celle-ci ne soit plus en appui sur les premiers moyens de supportage, et des moyens de déplacement horizontal (158, 160) montés sur ladite partie principale du plateau (112a) pour déplacer globalement lesdits moyens de soulèvement selon une direction perpendiculaire à la direction de sciage entre une première position dans laquelle la totalité de ladite pièce est au-dessus de ladite partie principale du plateau et une deuxième position dans laquelle la partie de la pièce à scier est au-dessus de ladite partie latérale du plateau.

13. Installation de sciage selon la revendication 12, caractérisée en ce que les moyens de soulèvement comprennent une pluralité d'organes à déplacement vertical (162, 164, 166, 168) dont une première extrémité est solidaire d'une plaque horizontale (160) disposée au-dessus de ladite partie principale du plateau (12a) et dont l'autre extrémité est susceptible d'agir sur la face inférieure de ladite pièce (118) et en ce que lesdits moyens de déplacement horizontal comprennent des moyens de roulement (58) disposés entre ladite plaque (60) et ladite partie principale du plateau (12a).

14. Installation de sciage selon la revendication 13, caractérisée en ce que lesdits organes à déplacement vertical sont des vérins (162, 164, 166, 168).

15. Installation de sciage selon l'une quelconque des revendications 1 à 14, caractérisée en ce que l'épaisseur de l'organe de sciage (20) est au plus égale à 9 mm.

## Claims

1. Installation for sawing mineral workpieces of the marble, marble slab or granite type, comprising a sawing apparatus including a sawing member in the form of a flat circular ring (20), means (66, 68) for rotating the sawing member about an axis (XX') passing through its centre (O) and means (30, 32) for guiding the said sawing member in rotation in order to keep the said sawing member in a fixed plane perpendicular to the said axis of rotation and to keep it rotating about the said axis, the said rotating means and the said guide means being disposed outside a rectangular parallelepipedal space (34, 36, 38, 64) disposed parallel to the plane of the ring and containing the centre (0) of the latter, characterised in that the said sawing member has a diameter at least equal to 3 metres, having an inner circular edge (24) and an outer circular edge (22) and a reduced thickness, one of the said edges being provided over its entire periphery with sawing elements (22a), in that the said rotating means (66, 68) act on the faces of the said ring (20a, 20b) and in that it moreover comprises a carriage for receiving the said workpiece to be sawn and displacing it relative to the sawing member in the direction of a diameter of the said sawing member.

2. Sawing installation according to claim 1, characterised in that it moreover comprises means (90, 92) for adding to the said rotational movement of the sawing member an alternating motion relative to the displacement of the workpiece to be sawn having a component in the sawing plane perpendicular to the sawing direction.

3. Sawing installation according to either of claims 1 and 2, characterised in that the sawing elements (22a) are disposed on the outer edge (22) of the said ring (20), in that the said guide means comprise guide wheels (30) cooperating with the inner edge (24) of the said ring and guide rollers (32) cooperating with the faces (20a, 20b) of the said ring.

4. Sawing installation according to claim 3, characterised in that the said rotating means include drive means (66, 68), the output of which is connected to transmission means (70, 72) cooperating with the faces (20a, 20b) of the said ring (20) in order to transmit the driving torque thereto.

5. Sawing installation according to either of claims 1 and 2, characterised in that the sawing elements are disposed on the inner edge (24) of the said ring (20).

6. Sawing installation according to any one of claims 1 to 5, characterised in that the parallelepipedal space has a horizontal axis passing through the centre (O) of the ring (20) and having a height (H) in the vertical direction greater than the height (h) of the workpieces to be sawn.

7. Sawing installation according to any one of claims 1 to 6, characterised in that the said guide means (30, 32) are disposed on either side of the said rectangular parallelepipedal space (34, 36, 38, 64).

8. Sawing installation according to any one of claims 2 to 7, characterised in that the said sawing member (20) consists of several ring elements (20₁, 20₂, 20₃) made integral with one another by removable means.

9. Sawing installation according to any one of claims 1 to 8, characterised in that the said carriage comprises a platform (12) for receiving the said workpiece to be sawn, means for displacing the said platform parallel to the sawing direction, at least one arm (120, 122) for gripping a plate (118a) cut off the said workpiece, the said arm having one end mounted to pivot about a pivot axis (124) integral with the platform (112) and parallel to the sawing direction (D), means (130) for controlling the pivoting of the arm between a first substantially vertical position in which the arm is in contact with the face (118b) of the sawn plate and a second position in which the arm is substantially horizontal interlocking means (134) integral with the arm and control means for interlocking the said sawn plate with the said arm when the latter is in its first position and preventing the said interlocking when the arm is in its second position, and means (136) for displacing the workpiece perpendicularly to the sawing direction by a distance corresponding to the thickness of the workpiece to be sawn.

10. Sawing installation according to claim 9, characterised in that the said carriage comprises two substantially identical arms (120, 122) mounted to pivot about the said pivot axis (124) and synchronised, the said arms being at a distance from one another.

11. Sawing installation according to either of claims 9 and 10, characterised in that the said interlocking means (34) are negative pressure systems

12. Sawing installation according to any one of claims 9 to 11, characterised in that the said platform (112) comprises a slot (140) parallel to the direction of displacement extending from a first end of the said platform to the second end of the said platform in order to define a main part (112a) of the platform and a lateral part (112b) of the platform intended to receive the portion of the workpiece to be sawn (118a), the two said parts both being integral with the said second end (142), and in that the displacement means comprise first (150, 152) and second (154) means for supporting the lower face of the workpiece, respectively integral with the said main part and the said lateral part, means (162, 164, 166, 168) for lifting the said movable workpiece between a first position in which they are not in contact with the said workpiece and a second position in which they lift the said workpiece in such a manner that the latter no longer bears against the first support means, and horizontal displacement means (158, 160) mounted on the said main part of the platform (112a) for total displacement of the said lifting means in a direction perpendicular to the sawing direction between a first position in which the entirety of the said workpiece is above the said main part of the platform and a second position in which the part of the workpiece to be sawn is above the said lateral part of the platform.

13. Sawing installation according to claim 12, characterised in that the lifting means comprise a plurality of vertical displacement members (162, 164, 166, 168), a first end of which is integral with a horizontal plate (160) disposed above the said main part of the platform (12a) and the other end of which can act on the lower face of the said workpiece (118) and in that the said horizontal displacement means comprise rolling means (58) disposed between the said plate (60) and the said main part of the platform (12a).

14. Sawing installation according to claim 13, characterised in that the said vertical displacement members are jacks (162, 164, 166, 168).

15. Sawing installation according to any one of claims 1 to 14, characterised in that the thickness of the sawing member (20) is a maximum of 9 mm.

## Patentansprüche

1. Anordnung zum Sägen von Mineralienstücken wie Marmor, Marmorplatten oder Granit, die eine Sägevorrichtung umfaßt, umfassend ein Sägemittel in Form eines kreisförmigen Ziehklingenkranzes (20), eine Einrichtung (66, 68) um das Sägemittel um eine durch seinen Mittelpunkt (0) verlaufende Achse (XX') in Rotation zu versetzen, und eine Einrichtung (30, 32) zur Führung des in Rotation befindlichen Sägemittels, um das Sägemittel in einer festen Ebene senkrecht zu der Rotationsachse zu halten und um es in Rotation um diese Achse zu halten, wobei die Einrichtung zum Versetzen in Rotation und die Einrichtung zur Führung außerhalb eines parallelepipeden, rechtwinkligen Volumens (34, 36, 38, 64) angeordnet sind, das parallel zu der Ebene des Kranzes und den Mittelpunkt (0) desselben enthaltend, angeordnet ist,
**dadurch gekennzeichnet, daß**
das Sägemittel einen Durchmesser aufweist, der mindestens gleich 3m ist, eine kreisförmige innere Kante (24) und eine kreisförmige äußere Kante (22), und eine verringerte Dicke aufweist, wobei eine dieser Kanten auf ihrem gesamten Umfang mit Sägeelementen (22a) versehen ist;
die Einrichtung zum Versetzen in Rotation (66, 68) auf die Flächen des Kranzes (20a, 20b) wirkt; und
diese außerdem einen Vorschubwagen zum Aufnehmen des zu sägenden Stückes und zu dessen Versetzen in bezug zu dem Sägemittel in der Richtung eines Durchmessers des Sägemittels aufweist.

2. Anordnung zum Sägen nach Anspruch 1, dadurch gekennzeichnet, daß sie außerdem eine Einrichtung (90, 92) umfaßt, um der Rotationsbewegung des Sägemittels eine relativ zu der Versetzung des zu sägenden Stückes alternierende Bewegung hinzuzufügen, die in der Sägeebene eine Komponente senkrecht zu der Sägerichtung aufweist.

3. Anordnung zum Sägen nach einem der Ansprüche 1 und 2, dadurch gekennzeichnet, daß die Sägeelemente (22a) auf der Außenkante (22) des Kranzes (20) angeordnet sind, daß die Einrichtung zur Führung Führungswalzen (30), die mit der Innenkante (24) des Kranzes zusammenwirken, und Führungsrollen (32), die mit den Stirnflächen (20a, 20b) des Kranzes zusammenwirken, umfaßt.

4. Anordnung zum Sägen nach Anspruch 3, dadurch gekennzeichnet, daß die Einrichtung zum Rotationsantrieb eine Motoreinrichtung (66, 68) umfaßt, deren Ausgang/Antrieb mit einer Übertragungseinrichtung (70, 72) verbunden ist, die mit den Stirnflächen (20a, 20b) des Kranzes (20) zusammenwirkt, um darauf das Motormoment zu übertragen.

5. Anordnung zum Sägen nach einem der Ansprüche 1 und 2, dadurch gekennzeichnet, daß die Sägeelemente auf der inneren Kante (24) des Kranzes (20) angeordnet sind.

6. Anordnung zum Sägen nach einem der Ansprüche 1 bis 5, dadurch gekennzeichnet, daß das parallelepipede Volumen eine horizontale durch den Mittelpunkt (0) des Kranzes (20) verlaufende Achse aufweist und in vertikaler Richtung eine größere Höhe (H) als die Höhe (h) der zu sägenden Stücke aufweist.

7. Anordnung zum Sägen nach einem der Ansprüche 1 bis 6, dadurch gekennzeichnet, daß die Einrichtung zum Führen (30, 32) beiderseits des parallelepipeden rechtwinkligen Volumens (34, 36, 38, 64) angeordnet sind.

8. Anordnung zum Sägen nach einem der Ansprüche 2 bis 7, dadurch gekennzeichnet, daß das Sägemittel (20) durch mehrere Kranzelemente (20₁, 20₂, 20₃) gebildet ist, die miteinander mittels einer demontierbaren Einrichtung verbunden sind.

9. Anordnung zum Sägen nach einem der Ansprüche 1 bis 8, dadurch gekennzeichnet, daß der Vorschubwagen eine Platte (12) zum Aufnehmen des zu sägenden Stückes, eine Einrichtung zum Hervorrufen der Versetzung der Platte parallel zu der Sägerichtung, zumindest einen Greifarm (120, 122) für eine aus dem Stück geschnittene Platte (118a), wobei dieser Arm ein um eine einstückige Schwenkachse (124) der Platte (112) und parallel zu der Sägerichtung (D) schwenkbar angeordnetes Erstreckung aufweist, eine Einrichtung (130) zum Führen der Schwenkung des Armes zwischen einer ersten, im wesentlichen senkrechten Position, in der der Arm in Berührung mit der Hauptfläche (118b) der gesägten Platte ist, und einer zweiten Position, in der der Arm im wesentlichen horizontal ist, eine einstückig mit dem Arm ausgebildete Befestigungseinrichtung (134) und eine Führungseinrichtung zum Einleiten der Befestigung der gesägten Platte mit dem Arm, wenn dieser in seiner ersten Position ist, und zum Hemmen der Befestigung, wenn der Arm in seiner zweiten Position ist, und Mittel (136) umfaßt, um das Stück senkrecht zu der Sägerichtung um einen Schritt entsprechend der Dicke des zu sägenden Stückes zu versetzen.

10. Anordnung zum Sägen nach Anspruch 9, dadurch gekennzeichnet, daß der Vorschubwagen zwei im wesentlichen gleiche Arme (120, 122) umfaßt, die um die Schwenkachse (124) schwenkbar angeordnet sind und synchron gesteuert werden, wobei die Arme zueinander beabstandet sind.

11. Anordnung zum Sägen nach einem der Ansprüche 9 und 10, dadurch gekennzeichnet, daß die Befestigungseinrichtung (34) aus Unterdrucksystemen besteht.

12. Anordnung zum Sägen nach einem der Ansprüche 9 bis 11, dadurch gekennzeichnet, daß die Platte (112) einen Spalt (140) parallel zu der Richtung der Versetzung umfaßt, der sich von einem ersten Ende der Platte zu einem zweiten Ende der Platte erstreckt, um einen Hauptabschnitt (112a) der Platte und einen zur Aufnahme des Abschnitts des zu sägenden Stückes (118a) vorgesehenen Nebenabschnitt (112b) der Platte zu definieren, wobei die beiden Abschnitte untereinander mit dem zweiten Ende (142) einstückig sind, und daß die Einrichtung zum Versetzen erste (150, 152) und zweite (154) Auflageeinrichtungen für die Unterseite des Stückes umfaßt, die einstückig mit jeweils dem Hauptabschnitt und dem Nebenabschnitt sind, eine Einrichtung zum Anheben (162, 164, 166, 168) des losen Stückes zwischen einer ersten Position, in der diese nicht in Berührung mit dem Stück ist, und einer zweiten Position, in der diese das Stück in einer Art und Weise anhebt, daß es nicht mehr auf der ersten Auflageeinrichtung abgestützt ist, und eine Einrichtung zum horizontalen Versetzen (158, 160) umfaßt, die auf dem Hauptabschnitt der Platte (112a) angeordnet ist, um die Einrichtung zum Anheben gemeinsam in einer Richtung senkrecht zu der Sägerichtung zwischen einer ersten Position, in der die Gesamtheit des Stückes über dem Hauptabschnitt der Platte ist, und einer zweiten Position zu versetzen, in der der Abschnitt des zu sägenden Stückes über dem Nebenabschnitt der Platte ist.

13. Anordnung zum Sägen nach Anspruch 12, dadurch gekennzeichnet, daß die Einrichtung zum Anheben eine Vielzahl von Einrichtungen (162, 164, 166, 168) zum vertikalen Versetzen umfaßt, deren ein Ende einstückig mit einer horizontalen Platte ist (160), die über dem Hauptabschnitt der Platte (12a) angeordnet ist, und deren anderes Ende geeignet ist, auf die untere Seite des Stückes (118) einzuwirken, und daß die Einrichtung zum horizontalen Versetzen eine Rolleinrichtung (58) umfaßt, die zwischen der Platte (60) und dem Hauptabschnitt der Platte (12a) angeordnet ist.

14. Anordnung zum Sägen nach Anspruch 13, dadurch gekennzeichnet, daß die Einrichtung zum vertikalen Versetzen aus Hubelemente (162, 164, 166, 168) besteht.

15. Anordnung zum Sägen nach einem der Ansprüche 1 bis 14, dadurch gekennzeichnet, daß die Dicke des Sägemittels (20) höchstens gleich 9mm ist.
